# EUROPEAN PATENT APPLICATION

(11) **EP 0 571 228 A2**
(43) Date of publication of application: **24.11.1993**
(21) Application number: 93303973.7
(22) Date of filing: 21.05.1993
(51) Int. Cl.: A23B 7/152, A23L 3/3445, B65D 81/28, A23B 7/144, A23L 3/3409, B32B 27/18

(54) **Sulphur dioxide generators for use in the fruit industry**

(30) Priority: 21.05.1992 ZA 923707
(71) Applicant: Clemes, Dennis Charles, High Constantia Cape Town Cape Province (ZA)
(72) Inventor: Clemes, Dennis Charles, High Constantia Cape Town Cape Province (ZA)
(74) Representative: Pendlebury, Anthony

(57) **Abstract**

A sulphur dioxide generator (10) is disclosed which comprises two sheets (12, 14) of synthetic material which are laminated together by a laminating substance (16). Dispersed in the laminating substance is a material (18) which, in the presence of moisture, generates sulphur dioxide. The sheets are pervious to water vapour and sulphur dioxide and can be natural, synthetic or semi-synthetic sheet material. Suitable sheet materials are polyesters, polypropylene, polyethylene, cellulose, paper, cellulose acetate or regenerated cellulose foil. On the outer face of one or both sheets (12, 14) there is a coating (20, 22) comprising a binder and a material of the same type as is dispersed in the laminating substance.

## Description

### THE FIELD OF THE INVENTION

THIS INVENTION relates to sulphur dioxide generators.

### BACKGROUND TO THE INVENTION

Sulphur dioxide generators are used, in the fruit industry, to inhibit the growth of botrytis on grapes during the period of time that the grapes are in transit from the point of packing to the point of sale. This period of time can, depending on the country of origin and the eventual market, be in excess of one month.

If a relatively short transit time is envisaged then what is known as a single stage generator is employed. This, in essence, comprises a substrate (usually paper) onto which a coating has been applied. The coating comprises a binder which has dispersed therein a material which, in the presence of moisture, generates sulphur dioxide. The usual material is sodium metabisulphite but it is also possible to use an acidic mixture comprising sodium sulphite and fumaric acid, an acidic mixture comprising sodium sulphite and potassium bitartrate or a mixture of both these acidic mixtures. Such a generator produces sulphur dioxide very quickly after it is exposed to moisture thereby creating in the carton in which the grapes are packed an atmosphere which has sulphur dioxide in it. The concentration of sulphur dioxide rapidly rises to a maximum and thereafter diminishes with time.

If a long transit period is envisaged then a two stage sulphur dioxide generator is used. A conventional form of two stage generator comprises two sheets of material such as polythene coated paper which is pervious to water vapour and also pervious to sulphur dioxide, the sheets being adhered to one another along a series of intersecting lines. These lines divide the space between the sheets into a series of pockets in which sulphur dioxide generating material in powder form is contained. A sheet is then coated on one side with a coating comprising a binder in which sulphur dioxide generating material is dispersed and secured to the outer face of one of said two sheets which are adhered to one another. The material in the binder starts to generate sulphur dioxide soon after it is placed in an atmosphere which has water vapour in it. This constitutes the first stage. After some delay water vapour penetrates the sheets and reaches the pockets, so that sulphur dioxide generation by the material in the pockets commences. This constitutes the delayed second stage.

In my United States patent 5106596 there is described a sulphur dioxide generator which comprises two sheets of paper or synthetic plastics material which are laminated to one another. The sulphur dioxide generating material is dispersed in the laminating substance which is preferably a wax.

For reasons which have not been understood heretofore, all known forms of sulphur dioxide generator sometimes fail to prevent the generation of botrytis on the grapes. A detailed consideration of these failures has resulted in the development by me of a possible explanation. Firstly it has been discovered that botrytis spores are substantially unaffected by dry sulphur dioxide gas. Even after having been subjected to a heavy concentration of the gas, and subsequently moistened, the botrytis spores will develop. However, if the botrytis spores are subjected to sulphurous acid then they do not thereafter develop.

When grapes are packed they are at ambient temperature. In grape growing regions, during the picking season, the temperatures are usually fairly high, typically 25 to 32°C. Subsequently, the grapes are cooled down to a temperature which is approximately 0°C. Cooling is effected by placing the grape cartons, with a sulphur dioxide generator in each carton, in a cold room. The period between the carton being closed and the cooling procedure commencing can vary quite widely depending on when the grapes are actually picked (at the beginning of the day or late in the day) and the distance of the cold room from the vineyard. Experimental work has shown that the success or failure of the sulphur dioxide generator depends on whether or not there is a concentration of sulphur dioxide in the atmosphere of the box at the time that water condenses out on the cooling grapes. If there is a concentration of sulphur dioxide in the carton, then sulphurous acid forms on the grapes and this prevents the botrytis spores from developing. If, however, the sulphur dioxide concentration level is low at the time water condenses out on the grapes, then insufficient sulphurous acid will be formed to prevent the subsequent development of the botrytis spores.

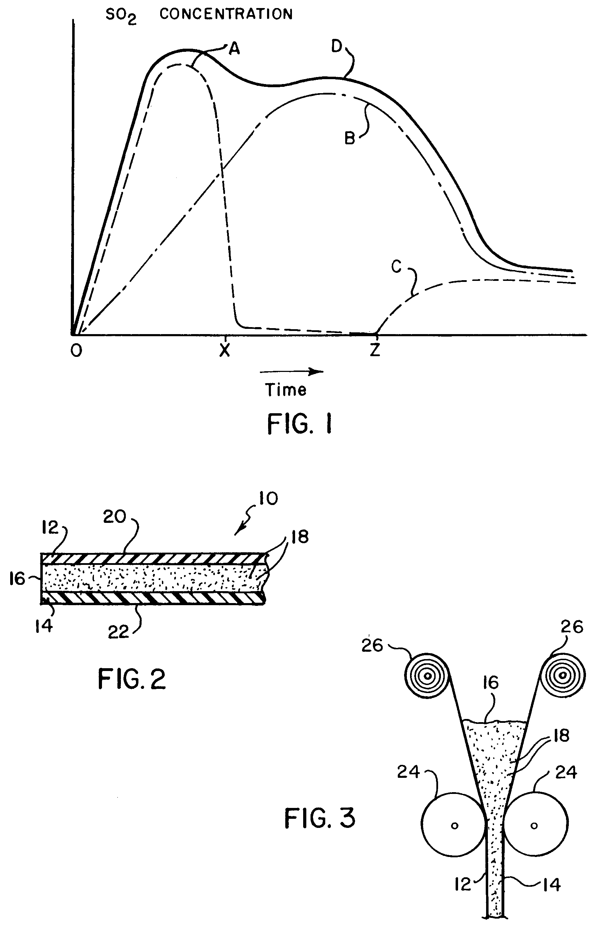

Referring now to Figure 1 of the accompanying drawings, this shows time on the horizontal co-ordinate and concentration of sulphur dioxide on the vertical co-ordinate. The line designated A indicates the way in which the concentration of sulphur dioxide varies with time when a single stage generator as described above is used. It will be seen that the concentration peaks shortly after the generator is exposed to water vapour. At this time the gas concentration can be, for example, 120 parts per million. Thereafter the concentration drops rapidly to a very low level and thereafter decreases slowly. Finally, the concentration decreases to zero (at time Z). If the grapes are cooled so that water condenses out on them before the time point indicated at X is reached, then there is a high enough concentration of sulphur dioxide to create the sulphurous acid necessary to prevent botrytis development. If, however, cooling occurs after time X then the sulphur dioxide concentration is so low that sulphurous acid is not produced in sufficient quantity, the botrytis spores develop and the generator fails.

Line B indicates the concentration of sulphur dioxide in the atmosphere of the box when the laminated generator of United States patent 5106596 is used. It will be noted that concentration increases more slowly than with a single stage generator and that peak concentration occurs much later. With this form of generator insufficient sulphurous acid is produced if cooling occurs very soon after packing. For example, grapes picked very early in the morning and put into a nearby cool room could be cold before sufficient sulphur dioxide has generated because the grapes are already quite cold when picked.

Lines A and C are together the curve of a two stage generator as described above. The first stage generator of a two stage generator is the same as the generator of a single stage generator. Hence curve A indicates its initial generation. Two stage generators are, however, deliberately fabricated so that second stage generation is delayed for a very considerable period of time eg 12 to 48 hours. Second stage generations starts at, for example, time Z at which point the concentration of sulphur dioxide starts to increase again. If, by this time the grapes, and the water on them, are cold, then there is insufficient sulphur dioxide to form enough sulphurous acid. The sulphur dioxide must be present whilst the water is cooling down so that more and more gas is dissolved as the water cools.

### BRIEF DESCRIPTION OF INVENTION

According to the present invention there is provided a sulphur dioxide generator which comprises two sheets which are permeable to water vapour and sulphur dioxide with a laminating substance between them, the laminating substance having a material dispersed therein which, in the presence of moisture, releases sulphur dioxide, the outer face of at least one of said sheets having thereon a coating comprising a binder in which is dispersed a material which, in the presence of moisture, releases sulphur dioxide.

Reverting now to Figure 1 of the drawing, line D shows the sulphur dioxide generating characteristics of a generator in accordance with the present invention.

When the generator is first placed in the carton, and the carton is closed, moisture in the carton reacts with the sodium metabulsulphite or other material in the coating and as a consequence curve D closely follows curve A but is slightly above it at peak concentration levels as there is supplemental sulphur dioxide generation from the material in the laminating substance which is between the two sheets. After a period of time the sodium metabulsulphite in the binder is depleted and the concentration of sulphur dioxide in the atmosphere of the box begins to diminish. However, by this time generation of sulphur dioxide from the material dispersed in the laminating substance has begun to make a significant contribution to concentration in the box atmosphere. Consequently, whilst the concentration does diminish somewhat from the peak concentration level initially reached, the contribution to concentration made by the material dispersed in the laminating substance causes the curve to move upwardly again to a second peak concentration. The second peak concentration is, however, somewhat lower than the first peak because first stage generation is by this time not making a significant contribution to concentration in the carton atmosphere. Second stage generation concentration also peaks and then starts to diminish. Hence, after the second peak, the concentration level falls somewhat and then continues at a fairly constant and relatively high concentration level for a considerable period of time.

It will be understood from curve D that apart from a very short period of time after the carton is closed, the sulphur dioxide levels in the carton are sufficiently high to produce adequate quantities of sulphurous acid. Thus, within reason, regardless of when the grapes are placed in the cool room, sulphurous acid is produced in sufficient quantity. Of course, if the grapes are held back and not cooled for an excessive period of time, then the generator will operate less efficiently as by that stage sulphur dioxide concentration will have fallen to its lower, relatively steady state value.

### BRIEF DESCRIPTION OF THE DRAWINGS

For a better understanding of the present invention, and to show how the same may be carried into effect, reference will now be made, by way of example, to the remainder of the accompanying drawings in which:-
Figure 2 is a diagrammatic section through part of a sulphur dioxide generator; and
Figure 3 illustrates one method of producing the sulphur dioxide generator of Figure 2.

### DETAILED DESCRIPTION OF THE DRAWINGS

The generator illustrated in Figure 2 is generally designated 10 and comprises two sheets of synthetic plastics material or paper which have been designated 12 and 14. The sheets are secured together by a laminating substance which has been designated 16. Dispersed in the substance 16 is a material 18 which, in the presence of moisture, releases sulphur dioxide. Such material can be sodium metabisulphite, an acidic mixture comprising sodium sulphite and fumaric acid, an acidic mixture comprising sodium sulphite and potassium bitartrate or a mixture of both these acidic mixtures.

It is preferred that the sheets 12 and 14 be of any synthetic plastics material which is sulphur dioxide and water vapour pervious. The synthetic plastics material must be capable of allowing water vapour to penetrate it to reach the material 18 and permit sulphur dioxide to pass through it to atmosphere. Suitable materials are polyester, polypropylene and polyethylene.

Reference numerals 20 and 22 designate coatings which are on the outer faces of the sheets 12 and 14. Each coating comprises a binder in which a material of the form described is dispersed. Whilst two coatings have been illustrated, it is possible for there to be a single coating.

It will be understood that immediately the generator is subjected to moisture vapour, this penetrates the coatings 20, 22 and first stage generation of sulphur dioxide commences after a short delay. After a longer delay the water vapour penetrates the sheets 12 and 14 and commences to react with the material dispersed in the laminating substance. It will be understood that if both sheets 12 and 14 are coated then there may be a longer delay before second stage generation of sulphur dioxide commences. For this reason it is preferred that only one of the sheets 12, 14 be coated.

Referring now to Figure 3, reference numerals 24 designate two heated rollers and reference numerals 26 two rolls of synthetic plastics material in web form. The webs are fed through the nip between the rollers 24 and the laminating substance 16 is between the two webs. The width of the nip between the rollers 24 determines what thickness of laminating substance can pass between the rollers 24 with the synthetic plastics material.

After lamination has taken place the laminate can be needle punched, if this is required, and then cut into generators of the desired size.

The sheets 12 and 14 can both be transparent, can both be pigmented so that they are opaque, or one can be pigmented and the other transparent, One or both sheets can have printing thereon.

An alternative method of production comprises feeding one of the webs of synthetic plastics material over a gravure roll and using the roll to apply to one surface of the web a layer of laminating substance of the requisite thickness. The other web is then brought into contact with the layer of laminating substance and passed between two rollers to press the two webs together with the laminating substance between them.

In another method the apparatus used to apply hot melt adhesive to labels is employed to apply the laminating substance. Such apparatus includes a coating head including a slit through which the laminating substance is forced as a thin stream.

The laminating substance can be a wax, such as a paraffin wax, with said material dispersed in it. Alternatively, commercially available laminating adhesive can have said material dispersed in it prior to being applied to said sheets.

Polyester is a suitable material for the sheets 12 and 14 as it does not crinkle or distort when said laminating substance is applied hot. If said substance is applied cold then polypropylene or polyethylene can be used. For example, if a contact adhesive is used as a laminating substance, and this is applied cold, then cheaper polyethylene can be used.

Calcium chloride (or another hydroscopic substance) is mixed in the laminating substance. The calcium chloride "attracts" water vapour through the sheets to the laminating substance and thereby enhances sulphur dioxide generation. In addition the presence of the water causes the calcium chloride to react with the metabisulphite and this releases sulphur dioxide at a fast rate so that curve D is followed. The reaction is as follows:-

CaCl₂ + 2NaHSO₃ = CaSO₃ + 2NaCl + SO₂ + H₂O

The result of this reaction is a surge of SO₂ gas, which marks the beginning of the second stage generation.

In addition to the synthetic plastics materials mentioned above, other synthetic, semi-synthetic or natural materials can be used. For example, paper, cellulose, cellulose acetate and regenerated cellulose foil can be laminated to form a generator.

The coating 20 (or the coatings 20, 22) can be applied before or after the sheets are laminated to one another.

It has been found that circulation of sulphur dioxide around the grapes can be inhibited by the generator itself when the packing procedure involves sliding the generator and the grapes into a bag of synthetic plastics material before placing the bag in the box. The generator overlies the grapes and effectively divides the space in the bag into a lower compartment which contains the grapes and an upper compartment which is empty. The gas concentration can be higher in the upper compartment than in the lower compartment. To overcome this difficulty a plurality of holes eg holes with a 5mm diameter, can be punched in the sheet. This enables the gas readily to pass from the upper compartment to the lower compartment.

Whilst heretofore sulphur dioxide generators have been used exclusively with grapes, it has now been discovered as a result of experimental work that if sulphur dioxide generators are placed in cartons containing kiwi fruit, the rate at which the kiwi fruit ripens is decreased. The effect of sulphur dioxide on the rate at which other fruit ripens is also being tested.

According to a further aspect of the present invention there is provided a carton containing kiwi fruit, or another fruit other than grapes, and a sulphur dioxide generator.

The sulphur dioxide generator can be of the type described in United States patent 5106596 or can be in accordance with the present invention.

The ability of the sulphur dioxide generator to slow-down the rate of ripening has two results which are commercially significant. Firstly, the fruit can be stored for longer periods and can thus be held back so that it reaches the market at a more favourable time for the grower and the distributer whilst still being in peak condition. Secondly, markets which might have been considered too remote to be reached with the assurance that the fruit would be in peak condition can now be reached. Previously, the time between packing and use of the fruit, where the market is a great distance from the producing area, could result in the fruit being overripe when it reached the market.

## Claims

1. A sulphur dioxide generator which comprises two sheets which are permeable to water vapour and sulphur dioxide with a laminating substance between them, the laminating substance having a material dispersed therein which, in the presence of moisture, releases sulphur dioxide, the outer face of at least one of said sheets having thereon a coating comprising a binder in which is dispersed a material which, in the presence of moisture, releases sulphur dioxide.

2. A sulphur dioxide generator as claimed in claim 1, wherein only the outer face of one of said sheets has a coating thereon.

3. A sulphur dioxide generator according to claim 1, wherein said laminating substance is a wax.

4. A sulphur dioxide generator according to claim 3, wherein said wax is paraffin wax.

5. A sulphur dioxide generator according to claim 1, wherein said substance is a laminating adhesive.

6. A sulphur dioxide generator according to claim 1, wherein said sheets are of synthetic plastics material.

7. A sulphur dioxide generator according to claim 6, wherein said synthetic plastics material is a polyester.

8. A sulphur dioxide generator according to claim 6, wherein said synthetic plastics material is polypropylene.

9. A sulphur dioxide generator according to claim 6, wherein said synthetic plastics material is polyethylene.

10. A sulphur dioxide generator according to claim 1, wherein said sheets are of paper, regenerated cellulose foil, cellulose or cellulose acetate.

11. A sulphur dioxide generator according to claim 1, and which has holes in it through which water vapour and sulphur dioxide can circulate.

12. A carton containing a sulphur dioxide generator and a fruit other than grapes, the sulphur dioxide generator slowing down the rate at which said fruit in the carton ripens.
